# EUROPÄISCHE PATENTANMELDUNG

(11) **EP 1 543 711 A2**
(43) Veröffentlichungstag der Anmeldung: **22.06.2005**
(21) Anmeldenummer: 04030132.7
(22) Anmeldetag: 20.12.2004
(51) Int. Cl.: A01D 34/00, A01D 34/68, B65D 85/68

(54) **Rasenmäher**

(30) Priorität: 20.12.2003 DE 20319777 U
(71) Anmelder: AL-KO KOBER AG, D-89359 Kötz (DE)
(72) Erfinder: Kober, Kurt, 89359 Kleinkötz (DE); Olbertz, Dankmar, 48291 Telgete (DE)
(74) Vertreter: Binder, Armin

(57) **Zusammenfassung**

Die Erfindung betrifft einen Rasenmäher mit einem Fahrgestell, unter dem sich ein rotierbares Schneidwerkzeug befindet, wobei der Rasenmäher im Kleinstformat mit einem haubenförmigen Fahrgestell (10), unter dem sich ein rotierbares Messerblatt befindet, ausgebildet und ein Elektromotor angebracht ist, wobei leicht lösbare Laufrollen (16, 18, 20, 22) auf Achsen (12, 14) des Fahrgestells (10), vorgesehen sind, ein abklappbarer oder teleskopisch einschiebbarer Griffbügel (30) und eine Box (62) zur Aufnahme des Rasenmähers vorgesehen sind

## Beschreibung

Die Erfindung betrifft einen Rasenmäher mit einem Fahrgestell, unter dem sich ein rotierbares Schneidwerkzeug befindet.

Rasenmäher sind in verschiedenen Größen und Ausführungsformen bekannt. Unter den bekannten Rasenmähern befinden sich auch relativ kleine Ausführungsformen mit einem Fahrgestell, einem Motor mit Mähwerk und einem Griffbügel zum Schieben des Rasenmähers. Selbst diese kleinen Rasenmäher sind noch relativ unhandlich, wenn es darum geht, sehr kleine Rasenflächen im Bereich von 100 qm und darunter zu mähen. Sie sind insbesondere schlecht zu transportieren, beispielsweise in einem Pkw-Kofferraum mitzuführen.

Für das Mähen von kleinen Vorgärten, Stellplätzen auf Campingplätzen und in ähnlichen Situationen besteht aber Bedarf nach einem Kleinst-Rasenmäher, der auf kleinem Raum zu verstauen und entsprechend leicht mitzunehmen ist.

Die Aufgabe der Erfindung besteht mithin darin, einen Kleinst-Rasenmäher der genannten Art zu schaffen.

Ein erfindungsgemäßer Rasenmäher im Kleinstformat zur Lösung der erfindungsgemäß gestellten Aufgabe umfasst somit ein haubenförmiges Fahrgestell, unter dem sich ein rotierbares Messerblatt befindet und auf dem ein Elektromotor angebracht ist, mit leicht lösbaren Laufrollen auf Achsen des Fahrgestells, eine abklappbare oder teleskopisch einschiebbare Griffstange sowie eine Box zur Aufnahme des Rasenmähers.

Der erfindungsgemäße Rasenmäher kann somit leicht in seiner Box transportiert werden. Der Benutzer kommt nicht in Gefahr, sich durch angesammelten Grasschnitt oder Schmiermittel zu verschmutzen. Die Box kann aus Stahlblech oder Kunststoff oder anderen geeigneten Materialien bestehen. Der Elektromotor hat vorzugsweise die Form eines Flachmotors.

Vorzugsweise ist eine Grasfangvorrichtung als faltbarer Einwegbeutel ähnlich einem Staubsaugerbeutel vorgesehen.

Der Elektromotor und die Welle des Messerblattes sind achsparallel nebeneinander auf beziehungsweise unter dem haubenförmigen Fahrgestell angeordnet. Die Ausgangswelle des Elektromotors und die Welle des Messerblattes, die nach oben aus dem haubenförmigen Fahrgestell herausragen, sind mit Hilfe von Keil- oder Riementrieben antriebsverbunden.

Vorzugsweise ist der Durchmesser der Laufrollen durch aufsteckbare Ringe vergrößerbar, damit die Schnitthöhe des geschnittenen Grases eingestellt werden kann. Die Laufrollen können aber auch eine Anzahl von Speichen aufweisen, an denen die zwischen den Speichen liegenden Sektoren in Radialrichtung verschiebbar und verrastbar sind. Auf diese Weise entstehen ebenfalls unterschiedliche Durchmesser der Laufrollen, die eine Höhenverstellung des Fahrgestells ermöglichen. Andererseits können aber auch die Achsen der Laufrollen mit Hilfe von Exzentern oder Schwenkantrieben höhenverstellbar am Fahrgestell angebracht sein.

Der Elektromotor wird vorzugsweise durch eine aufladbare Batterie (Akku) angetrieben. In der Box kann sich ein Ladeanschluss befinden, an den der in der Box verstaute Rasenmäher angeschlossen wird, während auf der Außenseite der Box ein Kabel zum Anschließen an das örtliche Stromnetz vorgesehen ist. Der Rasenmäher und die Box bilden somit eine zusammengehörige Einheit.

Des weiteren schlägt der Erfinder einen Rasenmäher vor, der als Antrieb eine Handbohrmaschine, vorzugsweise eine Akkubohrmaschine, verwendet. Hier kann im Bereich der Antriebswelle ein Adapter angebracht sein, der die Handbohrmaschine aufnimmt, so dass diese einen festen Halt auf dem Rasenmäher besitzt. Beispielsweise kann dieses durch ein Klemmsystem geschehen, in das die Bohrmaschine eingeklickt wird. Es liegt allerdings auch im Rahmen der Erfindung, die Bohrmaschine durch Anschrauben, ähnlich wie es bei Bohrständern für Handbohrmaschinen üblich ist, zu befestigen.

Vorteilhaft ist es dabei, wenn die Bohrmaschine an der Abtriebswelle ein Schnellverschluss-System und der Rasenmäher an der Antriebswelle ein entsprechend passendes Gegenstück hierzu aufweist. Bei Bohrhammer-Systemen ist dieses als "SDSplus" bekannt. Dadurch kann das Ansetzen der Bohrmaschine in Verbindung mit einem Klemmsystem für die Bohrmaschine selbst ohne jegliches schrauben durchgeführt werden.

Eine weitere vorteilhafte Ausführung sieht vor, anstelle von Schneidmessern als Schneidwerkzeug zumindest einen Schneidfaden zu verwenden. Ein solcher Schneidfaden ist beispielsweise aus sogenannten Rasentrimmern bekannt. Nachteil dieser Rasentrimmer ist jedoch, dass sie keine definiertes Gehäuse aufweisen, über keine Abstandseinstellung zum Boden und über keinen Auffangkorb für den Rasenschnitt verfügen. Ein hierbei verwendeter Schneidfaden kann beispielsweise aus Kunststoff, vorzugsweise Nylon, bestehen oder als Stahlfaden, vorzugsweise mit Kunststoff oder Nylon überzogen, ausgebildet sein. Zusätzlich kann eine automatische Einstellvorrichtung für die Fadenlänge des Schneidfadens vorgesehen werden.

Vorteilhaft ist es auch, wenn der Rasenmäher zur Energieversorgung des Antriebs ein Adapter für mindestens ein Akku-Paket eines Akku-Schraubers aufweist und/oder ein 12V-Anschluß zum Betrieb mit einer Autobatterie, vorzugsweise über einen Zigarettenzünder-Anschluss, vorgesehen ist. Besonders umweltfreundlich ist eine Ausführung des Rasenmähers mit einem Solarpanel, welches einen integrierten Akku für den Antrieb automatisch nachlädt.

Des weiteren kann der Rasenmäher einen Griff aufweisen, der mit einem einzigen Rohr am Rasenmäher befestigt ist. Ein solches Führungselement lässt sich besonders kompakt zusammenlegen, zusammenklappen oder teleskopartig zusammenschieben.

Bevorzugt weist der erfindungsgemäße Rasenmäher eine Schnittbreite von nicht mehr als 28cm auf, wobei diese Schnittbreite auch durch zwei nebeneinander angeordnete Schneidwerkzeuge, vorzugsweise Schneidfäden, verwirklicht wird. Insbesondere in der Ausführung mit ansteckbarem Akkubohrer ist es sinnvoll, relativ kleine Durchmesser für die Schneidwerkzeuge zu verwenden, da diese Akkubohrer über relativ begrenzte Drehmomente verfügen. Aus gleichem Grund ist es auch günstig, wenn die Akkubohrer unmittelbar mit der Antriebswelle verbunden werden, damit möglichst wenig Kraftverluste im Antriebsstrang entstehen. Hierbei kann es auch vorteilhaft sein, anstelle eines einzigen Akkubohrers zwei parallel angeordnete Akkubohrer zu verwenden, wobei jeder Bohrer die Antriebswelle eines Schneidwerkzeuges, vorzugsweise mit Schneidfaden, direkt antreibt.

Grundsätzlich kann, insbesondere bei den Ausführungen mit ansteckbarem Akkuschrauber oder Akkubohrer, auch auf besondere Schutzschalter verzichtet werden. Das Ein/Ausschalten findet also direkt am Akkuschrauber oder Akkubohrer statt.

Ergänzend wird noch darauf hingewiesen, dass die Box des Rasenmähers so gestaltet werden kann, dass ein Teil der Box durch das Gehäuse des Rasenmähers gebildet wird. Hierbei kann beispielsweise die Unterseite mit dem Schneidwerkzeug einfach durch einen Deckel abgedeckt werden und auf der Oberseite des Rasenmähers ebenfalls ein entsprechend geformter Deckel aufgesetzt werden, so dass die Seiten der gesamten Box zumindest teilweise durch das Gehäuse des Rasenmähers selbst gebildet werden.

Im folgenden werden bevorzugte Ausführungsbeispiele der Erfindung anhand der beigefügten Zeichnungen näher erläutert, wobei in den Figuren nur die für die Erfindung wesentliche Merkmale dargestellt sind und die in den Figuren dargestellten Ausführungen lediglich beispielhafte Varianten zeigen, die keine Einschränkung bezüglich des Schutzbereiches darstellen sollen.

Es stellen dar:
- Figur 1:: Perspektivische Darstellung des erfindungsgemäßen Rasenmähers in teilweise zusammengelegter Stellung in der zugehörigen Box;
- Figuren 2 bis 4:: Verschiedene Möglichkeiten der Höhenverstellung;
- Figur 5:: Box zur Aufnahme des erfindungsgemäßen Rasenmähers;
- Figur 6:: Rasenmäher mit einarmigem Griffbügel mit Handgriff und als Grasfangkorb verwendbarer Box.

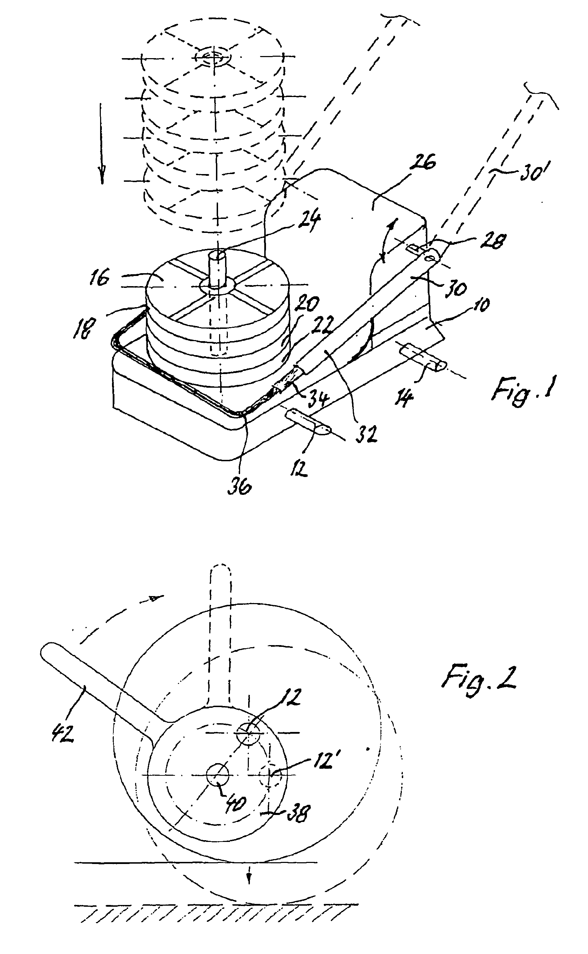

Die **Figur 1** ist eine perspektivische Darstellung eines erfindungsgemäßen Rasenmähers in teilweise demontiertem Zustand. Die Basis bildet ein haubenförmiges, an der Unterseite offenes Fahrgestell 10, von dem an beiden gegenüberliegenden Seiten jeweils zwei Achsen 12, 14 ausgehen, auf denen Laufrollen 16, 18, 20, 22 leicht lösbar montiert werden können. In Figur 1 sind die Laufrollen 16, 18, 20, 22 demontiert. Sie sind auf einen Stift 24 aufgeschoben, der senkrecht von der Oberseite des Fahrgestells 10 aufragt.

Auf dem Fahrgestell befindet sich weiterhin ein Motorgehäuse 26, unter dem sich ein nicht sichtbarer Elektromotor befindet.

Auf gegenüberliegenden Seiten sind an dem Motorgehäuse 26 Achsstifte 28 befestigt, an denen ein Griffbügel 30 schwenkbar befestigt ist, der es gestattet, den Rasenmäher über eine Rasenfläche zu schieben. Dieser insgesamt U-förmige Griffbügel 30 ist aus der gestrichelt dargestellten Betriebsstellung in die in durchgezogenen Linien gezeigte Stellung umklappbar. Wie in Figur 1 gezeigt ist, ist der Griffbügel zusammengesetzt aus einzelnen Abschnitten 30, 32, 34 die als teleskopisch zusammenschiebbare Rohre ausgebildet und über einen Handgriff 36 verbunden sind.

Der nicht dargestellte Elektromotor weist eine senkrechte Welle auf, die parallel zu dem Stift 24 und damit senkrecht zum Fahrgestell gerichtet ist. Ferner ist an der Unterseite des Fahrgestells ein rotierendes Messerblatt vorgesehen, dessen Achse ebenfalls senkrecht gerichtet ist. Die nicht dargestellten Messerwelle kann eine direkte Verlängerung der Motorwelle sein oder auch über einen Riementrieb, insbesondere Zahnriementrieb mit der Motorwelle oberhalb oder unterhalb des haubenförmigen Fahrgestelles verbunden sein.

Die Achsen 12, 14 auf beiden Seiten des Fahrgestells können in Bezug auf das Fahrgestell höhenverstellbar sein und somit in unterschiedliche Höhen in Bezug auf das Fahrgestell einstellbar sein.

Dies wird an einem Beispiel in **Figur 2** erläutert. Die als Beispiel dargestellte Achse 12 befindet sich an einer Scheibe 38, die um eine Achse 40 schwenkbar am Fahrgestell angebracht ist. Die Schwenkung der Scheibe 38 erfolgt mit Hilfe eines Handgriffs 42. Es ist erkennbar, dass durch Schwenken des Handgriffs 42 zwischen der in durchgezogenen Linie dargestellten und der gestrichelt dargestellten Position die Achse 12 in der Höhe verstellt werden kann.

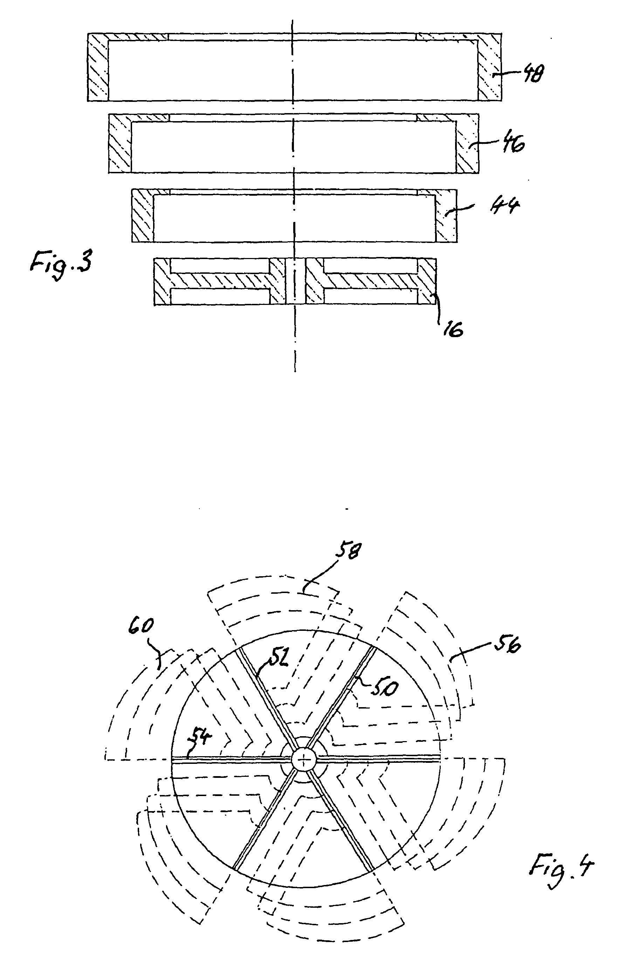

Die **Figur 3** zeigt eine andere Lösung zur Verstellung der Höhe des Mähwerkes, in diesem Falle durch Vergrößerung des Laufrollendurchmessers. Zu jeder Laufrolle 16, 18,20, 22 ist ein Satz von aufschiebbaren Ringen 44, 46, 48 vorgesehen, die auf die Laufrollen aufschiebbar sind und eine stufenweise Vergrößerung des Raddurchmessers ermöglichen. Durch Vergrößerung des Raddurchmessers wird die Mähebene in Bezug auf den Untergrund angehoben. Umgekehrt kann die Mähebene durch Abnehmen der Rinde 44, 46, 48 gesenkt werden.

Die **Figur 4** veranschaulicht eine andere Lösung zur Vergrößerung des Laufrollendurchmessers. Die Laufrollen weisen Speichen 50, 52, 54 auf, die die Laufrollenoberfläche in Sektoren unterteilen, im Beispielsfalle sechs Sektoren. Die Sektorenfelder 56, 58, 60 sind jeweils an einer der beiden benachbarten Speichen radial verschiebbar geführt. Die Sektorenfelder 56, 58, 60 können bei dieser radialen Verschiebung in einer Anzahl von radial unterschiedlichen Positionen verrastet werden. Dadurch kann der effektive Raddurchmesser vergrößert oder verkleinert werden. Zwar weisen die Laufrollen in der ausgefahrenen Stellung der Sektorenfelder keine geschlossene Lauffläche mehr auf, aber die Laufrollenfunktion bleibt trotz der Unterbrechung der Laufflächen weitgehend erhalten.

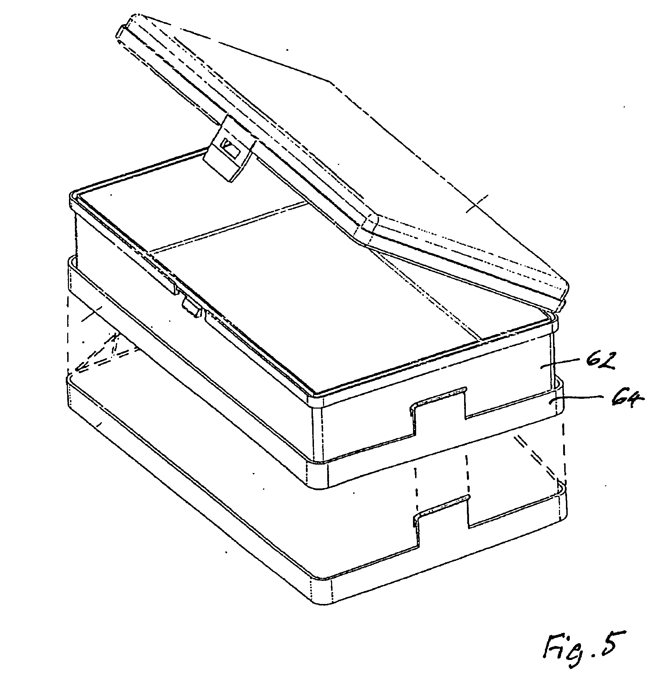

Die **Figur 5** zeigt eine Ausführungsform einer erfindungsgemäßen Box mit Wandhalterung. Die Box ist mit 62, die Wandhalterung mit 64 bezeichnet. Die Wandhalterung kann beispielsweise an der Wand einer Garage, eines Abstellraumes oder dergleichen angebracht werden und ermöglicht eine ordnungsgemäße Aufbewahrung des Rasenmähers mit Box.

Der Rasenmäher kann unmittelbar über ein Netzkabel mit Strom versorgt werden, kann jedoch auch als Akku-Gerät ausgebildet sein. In diesem Falle ist es zweckmäßig, einen Ladeanschluss im Inneren der Box vorzusehen, der über ein Kabel an der Außenseite mit einem Netzanschluss verbunden wird. Anstelle eines Wechselstrom-Netzanschlusses kann, vor allem für Camping-Zwecke, auch ein Anschluss an einen Zigarettenanzünder verwendet werden, wobei dann gegebenenfalls auf einen integrierten Akku verzichtet werden kann.

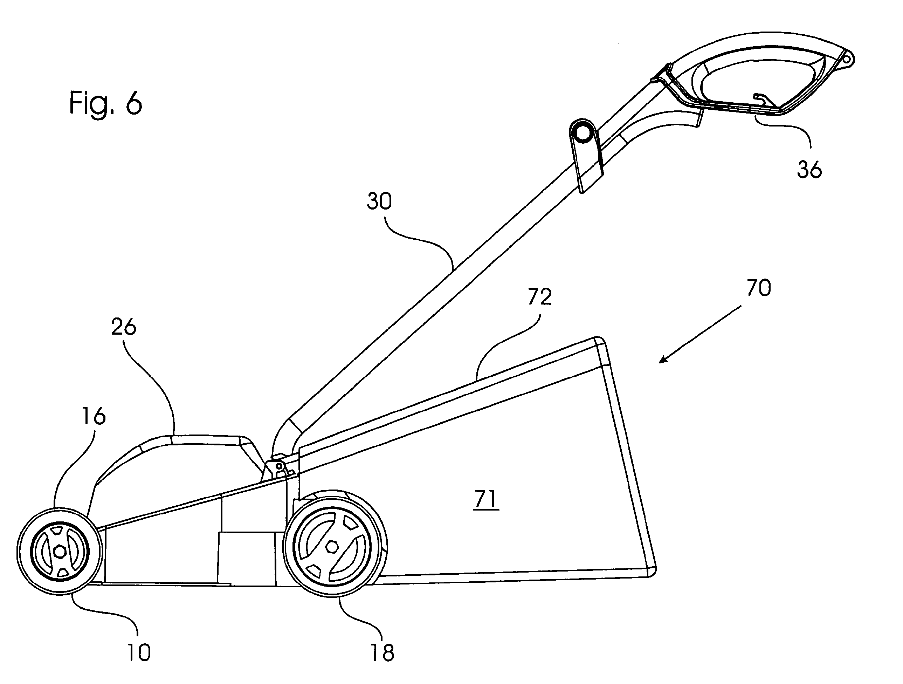

In der **Figur 6** ist eine besondere Ausführung eines erfin-dungsgemäßen Rasenmähers gezeigt, bei dem die Box, die als Transportbehälter für den Rasenmäher ausgebildet ist und aus einem Deckel 72 und einem Behälter 71 besteht, gleichzeitig als Grasfangkorb 70 verwendet werden kann. Zum Transport wird das größere Boxteil 71 auf der Oberseite des Fahrgestells 10 aufgesetzt und der Deckel 72 zum Verschließen der Unterseite des Rasenmähers verwendet. Im Betrieb können der Deckel 72 und das Boxteil 71 zu einem Grasfangkorb 70 zusammengesetzt und am Grasauswurf des Rasenmähers angesetzt werden. Aufgrund der sehr kompakten und schmalen Bauweise des erfindungsgemä-ßen Rasenmähers, der in der Regel eine Schnittbreite von nicht mehr als 28cm aufweist, ist es auch möglich, einen Griffbügel 30 mit Handgriff 36 zu verwenden, wie er bei Staubsaugern üblich ist. Dieser Griffbügel besteht lediglich aus einem Rohr, welches vorzugsweise mittig am Rasenmäher angebracht ist. Auch dieser Griffbügel kann teleskopartig in der Länge verstellbar und/oder klappbar ausgeführt werden und kann im Transportzustand des Rasenmähers innerhalb der Box verpackt werden.

Insgesamt wird also durch die Erfindung, ein kompakter Rasenmäher zur Verfügung gestellt, der sich insbesondere für den Campingbereich und zum Mähen kleiner Rasenflächen eignet und dabei besonders einfach und sauber in Fahrzeugen und Wohnwagen verstaubar ist. Mit einem solchen Rasenmäher kann gegebe-nenfalls auch auf einen Wechselstromanschlußss verzichtet werden, was insbesondere beim Camping vorteilhaft ist.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

### Bezugszeichenliste

- 10: Fahrgestell
- 12: Achse
- 14: Achse
- 16,18,20,22: Laufrollen
- 24: Stift
- 26: Motorgehäuse
- 28: Achsstifte
- 30: Griffbügel
- 32, 34, 36: Abschnitte des Griffbügels
- 38: Scheibe
- 40: Achse
- 42: Handgriff
- 44,46,48: aufschiebbare Ringe
- 50,52,54: Speichen
- 56,58,60: Sektorenfelder
- 62: Box
- 64: Wandhalterung
- 70: Grasfangkorb
- 71: Behälter
- 72: Deckel

## Patentansprüche

1. Rasenmäher mit einem Fahrgestell, unter dem sich ein rotierbares Schneidwerkzeug, **dadurch gekennzeichnet, dass** der Rasenmäher im Kleinstformat mit einem haubenförmigen Fahrgestell (10), unter dem sich ein rotierbares Messerblatt befindet, ausgebildet und ein Elektromotor angebracht ist, wobei leicht lösbare Laufrollen (16, 18, 20, 22) auf Achsen (12, 14) des Fahrgestells (10), vorgesehen sind, ein abklappbarer oder teleskopisch einschiebbarer Griffbügel (30) und eine Box (62) zur Aufnahme des Rasenmähers vorgesehen sind.

2. Rasenmäher nach Patentanspruch 1, **dadurch gekennzeichnet, dass** der Elektromotor achsparallel neben der Welle des Messerblattes angeordnet ist.

3. Rasenmäher nach Patentanspruch 2, **dadurch gekennzeichnet, dass** die Ausgangswelle des Elektromotors mit der Welle des Messerblattes mit Hilfe eines Keilriemen- oder Zahnriemenantriebs verbunden ist.

4. Rasenmäher nach einem der voranstehenden Patentansprüche 1 bis 3, **dadurch gekennzeichnet, dass** der Durchmesser der Laufrollen (16, 18, 20, 22) durch aufsteckbare Ringe (44, 46, 48) vergrößerbar ist.

5. Rasenmäher nach einem der Patentansprüchen 1 bis 3, **dadurch gekennzeichnet, dass** die Laufrollen (16, 18, 20, 22) durch Speichen (50, 52, 54) in Sektoren unterteilt sind und dass die Sektorenfelder (56, 58, 60) zwischen den Speichen jeweils entlang einer der benachbarten Speichen radial auswärts verschiebbar und in verschiedenen radialen Positionen festlegbar sind.

6. Rasenmäher nach einem der Patentansprüche 1 bis 3, **dadurch gekennzeichnet, dass** die Achsen (12, 14) der Laufrollen (16, 18, 20, 22) höhenverstellbar am Fahrgestell angebracht sind.

7. Rasenmäher nach einem der vorgehenden Patentansprüche, **dadurch gekennzeichnet, dass** die Laufrollen (16, 18, 20, 22) zur Aufbewahrung durch Aufstecken auf einen nach oben gerichteten Stift (24) auf dem Fahrgestell anzuordnen sind.

8. Rasenmäher nach einem der vorgehenden Patentansprüche, **dadurch gekennzeichnet, dass** der Elektromotor durch eine aufladbare Batterie antriebbar ist.

9. Rasenmäher nach Patentanspruch 8, **dadurch gekennzeichnet, dass** im Inneren der Box (62) ein Ladeanschluss für die aufladbare Batterie vorgesehen ist und dass der Ladeanschluss mit einem Kabel auf der Außenseite der Box verbunden ist.

10. Rasenmäher nach einem der vorgehenden Patentansprüche oder dem Oberbegriff des Patentanspruches 1 oder dem Oberbegriff des Patentanspruches 1 in Verbindung mit den Merkmalen mindestens eines der Unteransprüche 2 bis 9, **dadurch gekennzeichnet, dass** als Elektromotor eine Handbohrmaschine, vorzugsweise eine Akkubohrmaschine, verwendet wird.

11. Rasenmäher nach Patentanspruch 10, **dadurch gekennzeichnet, dass** im Bereich der Antriebswelle ein Adapter vorgesehen ist, der die Handbohrmaschine aufnimmt.

12. Rasenmäher nach Patentanspruch 11, **dadurch gekennzeichnet, dass** die Bohrmaschine an der Abtriebswelle ein Schnellverschluss-System und der Rasenmäher an der Antriebswelle ein Gegenstück hierzu aufweist.

13. Rasenmäher nach einem der vorgehenden Patentansprüche, **dadurch gekennzeichnet, dass** als Schneidwerkzeug eine Schneidfaden vorgesehen ist.

14. Rasenmäher nach Patentanspruch 13, **dadurch gekennzeichnet, dass** der Schneidfaden aus Kunststoff, vorzugsweise Nylon, besteht.

15. Rasenmäher nach Patentanspruch 13, **dadurch gekennzeichnet, dass** der Schneidfaden als Stahlfaden, vorzugsweise mit Kunststoff oder Nylon überzogen, ausgebildet ist.

16. Rasenmäher nach einem der vorgehenden Patentansprüche 13 bis 15, **dadurch gekennzeichnet, dass** eine automatische Einstellvorrichtung für die Fadenlänge des Schneidfadens vorgesehen ist.

17. Rasenmäher nach einem der vorgehenden Patentansprüche 1 bis 16, **dadurch gekennzeichnet, dass** zur Energieversorgung des Antriebs ein Adapter für mindestens ein Akku-Paket eines Akku-Schraubers vorgesehen ist.

18. Rasenmäher nach einem der vorgehenden Patentansprüche 1 bis 17, **dadurch gekennzeichnet, dass** ein 12V-Anschluß zum Betrieb mit einer Autobatterie, vorzugsweise über einen Zigarettenzünder-Anschluss, vorgesehen ist.

19. Rasenmäher nach einem der vorgehenden Patentansprüche 1 bis 18, **dadurch gekennzeichnet, dass** ein Solarpanel angebracht ist, welches einen integrierten Akku automatisch lädt.

20. Rasenmäher nach einem der vorgehenden Patentansprüche 1 bis 19, **dadurch gekennzeichnet, dass** ein Griff vorgesehen ist, der mit einem einzigen Rohr am Rasenmäher befestigt ist.
